# EUROPEAN PATENT APPLICATION

(11) **EP 2 293 279 A1**
(43) Date of publication of application: **09.03.2011**
(21) Application number: 10173874.8
(22) Date of filing: 24.08.2010
(51) Int. Cl.: G09G 3/34

(54) **Display module and display apparatus**

(30) Priority: 27.08.2009 TW 098128818
(71) Applicant: Aussmak Optoelectronic Corp., Yongkang City, Tainan County 710 (TW)
(72) Inventor: LEE, Hsin-Ta, 701, Tainan City (TW)
(74) Representative: 2K Patentanwälte Blasberg Kewitz & Reichel

(57) **Abstract**

A display module includes a first substrate (21), a second substrate (22), a driving unit (23), a plurality of data lines (D₃₁-D₃ₙ) and a plurality of scan lines (S₃₁-S₃ₘ). The first substrate (21) has a first pixel electrode array (211), and the second substrate (22) has a second pixel electrode array (221). The data lines (D₃₁-D₃ₙ) are electrically connected to the driving unit (23) and the first pixel electrode array (211), and part of the data lines (D₃₁-D₃₃) are electrically connected to the second pixel electrode array (221) through the first substrate (21). The scan lines (S₃₁-S₃ₘ) are electrically connected to the driving unit (23) and the first pixel electrode array (211), and are not electrically connected to the second pixel electrode array (221).

## Description

### BACKGROUND OF THE INVENTION

### Field of Invention

The present invention relates to a display module and a display apparatus.

### Related Art

The display apparatuses have been sufficiently improved from the traditional CRT display apparatuses. For example, the LCD apparatus, OLED display apparatus, and E-paper display apparatus are developed recently, and they all have the advantages of reduced volume and weight. Thus, they can be widely applied to the communication products, information products and consumer electronics products.

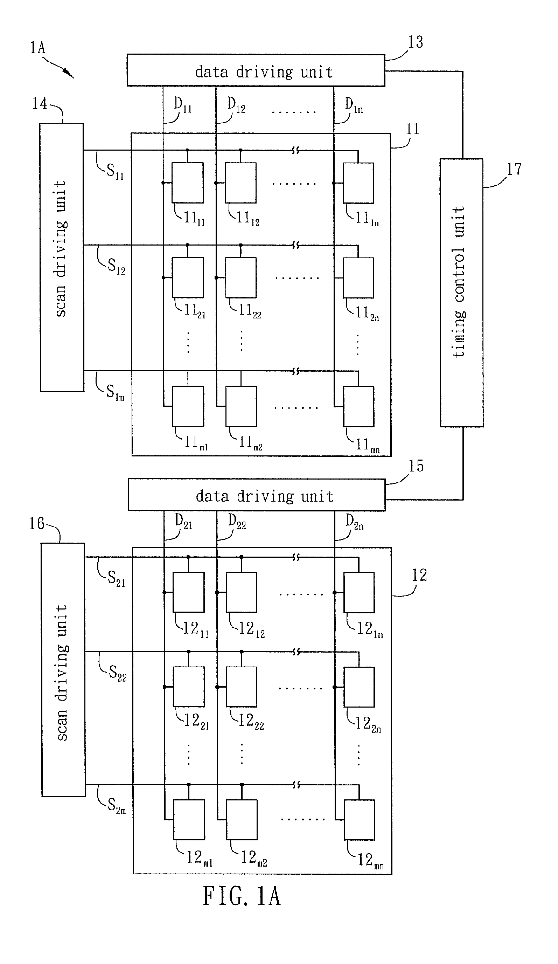

As shown in FIG. 1A, a conventional display apparatus includes an LCD display module 1A, which has a first substrate 11, a data driving unit 13, and a scan driving unit 14. The data driving unit 13 is electrically connected with the first substrate 11 through a plurality of data lines D₁₁ to D₁ₙ, and the scan driving unit 14 is electrically connected with the first substrate 11 through a plurality of scan lines S₁₁ to S₁ₘ.

Due to the progress of technologies, the display apparatuses have been developed toward larger size for providing better display quality to the users. For this purpose, the large-sized substrate may be directly manufactured, but this needs many new manufacturing machines. Moreover, every time the size requirement is increased, the new manufacturing machines are needed. This is very uneconomic and cost waste.

To solve this problem, the prior art discloses the method to manufacture several small-sized substrate and then assemble them to form a large-sized substrate. In this case, the display module 1A may further include a second substrate 12, a data driving unit 15, and a scan driving unit 16. The data driving unit 15 is electrically connected with the second substrate 12 through a plurality of data lines D₂₁ to D₂ₙ, and the scan driving unit 16 is electrically connected with the second substrate 12 through a plurality of scan lines S₂₁ to S₂ₘ. In addition, the data driving unit 13 and the data driving unit 15 are electrically connected to a timing control unit 17.

The scan lines S₁₁ to S₁ₘ and the data lines D₁₁ to D₁ₙ are crossly disposed on the first substrate 11 to form a plurality of interlaced areas, and a plurality of pixels 11₁₁ to 11ₘₙ are disposed corresponding to the interlaced areas. The scan lines S₂₁ to S₂ₘ and the data lines D₂₁ to D₂ₙ are crossly disposed on the second substrate 12 to form a plurality of interlaced areas, and a plurality of pixels 12₁₁ to 12ₘₙ are disposed corresponding to the interlaced areas. The operation of the display module 1A will be described hereinbelow. During a first time period, the scan lines S₁₁ to S₁ₘ sequentially transmit a voltage signal of high level, so that a first image signal can be written into the pixels 11₁₁ to 11ₘₙ through the data lines D₁₁ to D₁ₙ. During a second time period, the scan lines S₂₁ to S₂ₘ sequentially transmit a voltage signal of high level, so that a second image signal can be written into the pixels 12₁₁ to 12ₘₘ through the data lines D₂₁ to D₂ₙ.

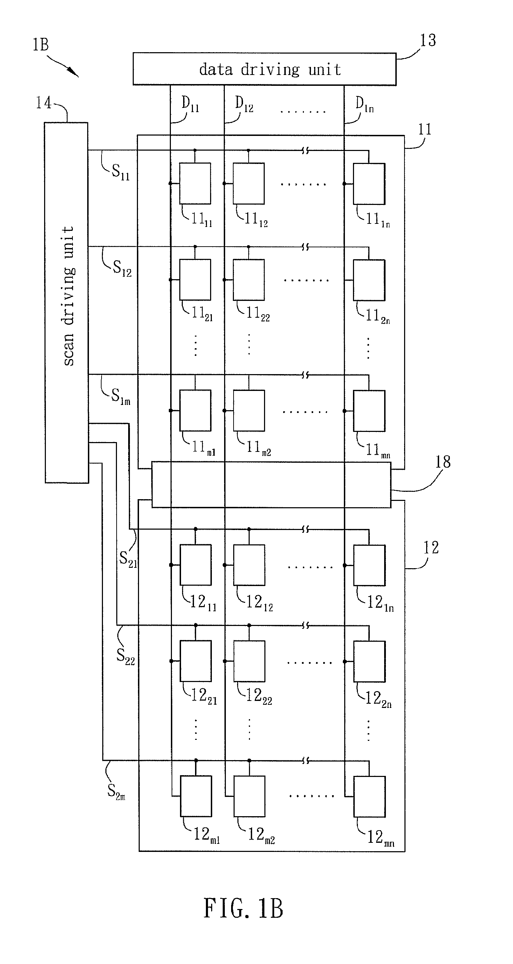

Besides, a display module 1B as shown in FIG. 1B is also disclosed for solving the above problem. The display module 1B is different from the display module 1A in that the display module 1B has a connecting plate 18 for connecting the first substrate 11 and the second substrate 12, and the display module 1B has only one data driving unit 13 and one scan driving unit 14.

The first substrate 11 and the second substrate 12 are transistor substrates. According to the above-mentioned control method, the display modules 1A and 1B can be applied for processing more complex displayed screen and the situation needing fast screen switch. Of course, when the display apparatus is applied for processing simpler displayed screen and the situation not needing fast screen switch, the components in the second substrate 12 can be decreased to reduce the power consumption and save manufacturing cost. Therefore, it is an important subject to provide a display module and a display apparatus that have fewer components so as to reduce the power consumption.

### SUMMARY OF THE INVENTION

In view of the foregoing, an objective of the invention is to provide a display module and a display apparatus that have fewer components so as to reduce the power consumption.

To achieve the above, the present invention discloses a display module including a first substrate, a second substrate, a driving unit, a plurality of data lines, and a plurality of scan lines. The first substrate has a first pixel electrode array, and the second substrate has a second pixel electrode array. The data lines are electrically connected to the driving unit and the first pixel electrode array, and the scan lines are electrically connected to the driving unit and the first pixel electrode array. In this invention, at least a part of the data lines are electrically connected to the second pixel electrode array through the first substrate, and all of the scan lines are not electrically connected to the second pixel electrode array.

In addition, the present invention also discloses a display apparatus including a display module. The display module includes a first substrate, a second substrate, a driving unit, a plurality of data lines, and a plurality of scan lines. The first substrate has a first pixel electrode array, and the second substrate has a second pixel electrode array. The data lines are electrically connected to the driving unit and the first pixel electrode array, and the scan lines are electrically connected to the driving unit and the first pixel electrode array. In this invention, at least a part of the data lines are electrically connected to the second pixel electrode array through the first substrate, and all of the scan lines are not electrically connected to the second pixel electrode array.

As mentioned above, the display module and apparatus of the invention include a second substrate, which has a second pixel electrode array and is disposed with several data lines. Compared with the prior art, the scan lines of the invention are not electrically connected with the second pixel electrode array, so that the components of the display module and apparatus can be reduced. This can sufficiently decrease the power consumption. In addition, the second pixel electrode array can operate without the driving signal transmitted through the scan lines.

### BRIEF DESCRIPTION OF THE DRAWINGS

The invention will become more fully understood from the detailed description and accompanying drawings, which are given for illustration only, and thus are not limitative of the present invention, and wherein:

FIG. 1A is a schematic diagram of a conventional display module;

FIG. 1B is a schematic diagram of another convention display module;

FIG. 2 is a schematic diagram showing an equivalent circuit of a display module according to an embodiment of the invention; and

FIG. 3 is a schematic diagram showing the cross-section of the display module according to the embodiment of the invention.

### DETAILED DESCRIPTION OF THE INVENTION

The present invention will be apparent from the following detailed description, which proceeds with reference to the accompanying drawings, wherein the same references relate to the same elements.

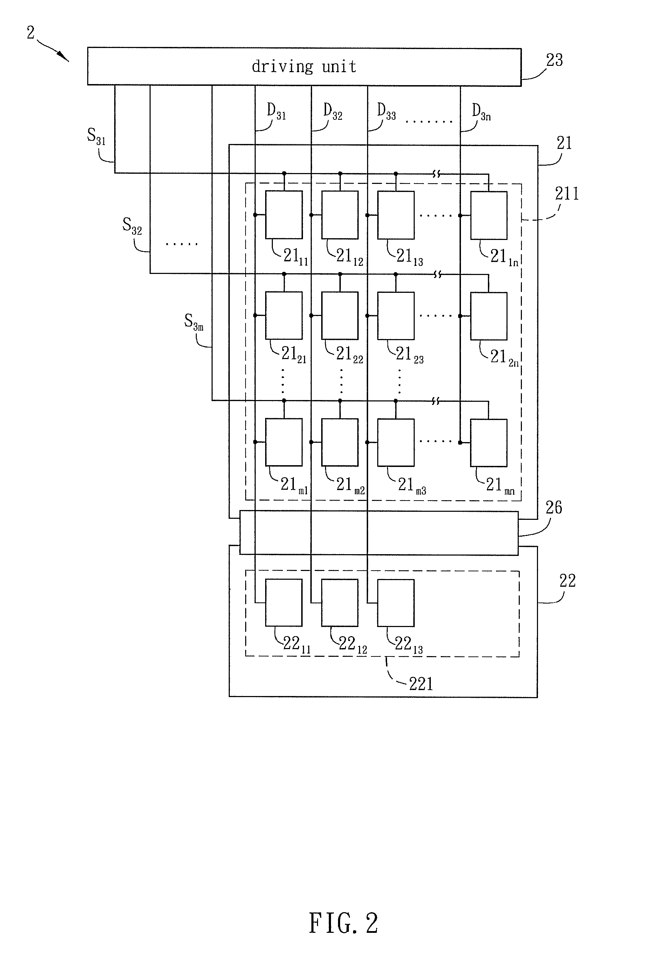

With reference to FIG 2, a display apparatus according to an embodiment of the invention includes a display module 2. The display module 2 includes a first substrate 21, a second substrate 22, a driving unit 23, a plurality of data lines D₃₁ to D₃ₙ, and a plurality of scan lines S₃₁ to S₃ₘ·

The first substrate 21 has a first pixel electrode array 211, and the second substrate 22 has a second pixel electrode array 221. In this embodiment, the first substrate 21 can be a transistor substrate, and the second substrate 22 can be a printed circuit board (PCB), a flexible printed circuit (FPC) board, or a glass circuit board. Compared with the prior art, the second substrate 22 of the embodiment is cheaper than the conventional first substrate 11, so that the manufacturing cost of the display module 2 of the embodiment can be reduced.

The scan lines S₃₁ to S₃ₘ, are electrically connected to the driving unit 23 and the first pixel electrode array 211, and the data lines D₃₁ to D₃ₙ are electrically connected to the driving unit 23 and the first pixel electrode array 211. Moreover, at least a part of the data lines D₃₁ to D₃ₙ are electrically connected to the second pixel electrode array 221 through the first substrate 21. In this embodiment, the data lines D₃₁ to D₃₃ are, for example but not limited to, electrically connected to the second pixel electrode array 221.

In practice, the display module 2 of the embodiment may further include a connecting plate 26 for connecting the first substrate 21 and the second substrate 22, so that the data lines D₃₁ to D₃₃ can be electrically connected with the second pixel electrode array 221. To be noted, besides the connecting board 26, the first substrate 21 and the second substrate 22 can also be connected by, for example but not limited to, engaging or adhering.

As shown in FIG. 2, the scan lines S₃₁ to S₃ₘ and the data lines D₃₁ to D₃ₙ are crossly disposed on the first substrate 21 to form a plurality of interlaced areas, and a plurality of pixels 21₁₁ to 21ₘₙ of the first pixel electrode array 211 are disposed in array and corresponding to the interlaced areas. In this embodiment, the material of the first pixel electrode array 211 can be a conductive material such as, for example but not limited to, metal or transparent conductive material (e.g. ITO).

On the second substrate 22, a plurality of pixels 22₁₁ to 22ₘₙ of the second pixel electrode array 221 are electrically connected with the data lines D₃₁ to D₃₃. In this embodiment, the material of the second pixel electrode array 221 can also be a conductive material such as, for example but not limited to, metal or transparent conductive material (e.g. ITO). In this case, the data lines D₃₁ to D₃₃ and the second pixel electrode array 221 can be disposed on opposite sides or the same side of the second substrate 22. Compared with the prior art, the second pixel electrode array 221 is not electrically connected with the scan lines S₃₁ to S₃ₘ, and layout pattern of the second substrate 22 is much simpler. Accordingly, the display module 2 of the embodiment can have fewer components so as to decrease the power consumption.

To be noted, the arrangement of the pixel units on the second substrate 22 can be varied depending on the product or design requirements. In practice, the pixels on the second substrate 22 can be arranged as a 7-segment display, letter pattern, or symbol pattern.

The operation of the display module 2 will be described hereinafter with reference to FIG. 2. During a first time period, the scan lines S₃₁ to S₃ₘ transmit a voltage signal of high level in sequence, so that an image signal can be transmitted through the data lines D₃₁ to D₃ₙ and then written into the pixels 21₁₁ to 21ₘₙ. During a second time period, the scan lines S₃₁ to S₃ₘ are not driven, and the data lines D₃₁ to D₃₃ transmits a data signal to the second pixel electrode array 221 for displaying an image screen.

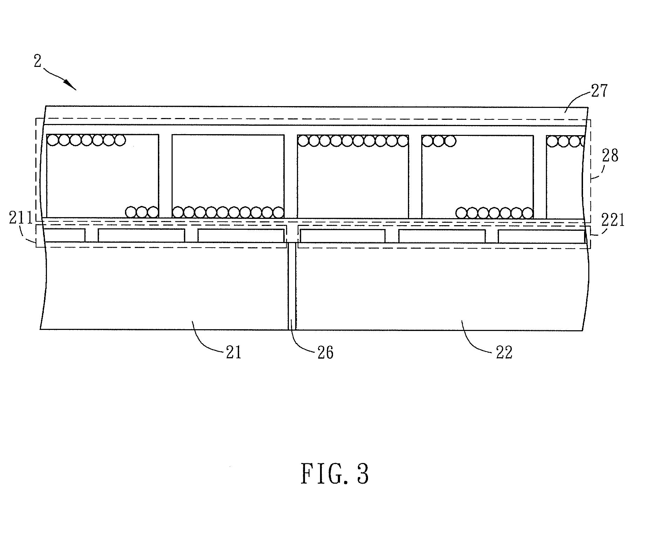

Referring to FIG. 3, the display module 2 of the embodiment further includes a counter electrode unit 27 and an optoelectronic display unit 28.

The counter electrode unit 27 is disposed opposite to the first substrate 21 and the second substrate 22. In this case, the counter electrode unit 27 can be an electrode layer or an electrode plate. In addition, since the counter electrode unit 27 must be transparent, it can be made of indium tin oxide (ITO), aluminium zinc oxide (AZO), indium zinc oxide (IZO), or cadmium zinc oxide.

The optoelectronic display unit 28 is disposed between the counter electrode 27 and the first and second substrates 21 and 22. In this case, the optoelectronic display unit 28 can be, depending on the design requirement, an optoelectronic display element or an optoelectronic display thin film. In this embodiment, the optoelectronic display unit 28 may include an electrophoresis material or an electrowetting material.

As mentioned above, the display module and apparatus of the invention include a second substrate, which has a second pixel electrode array and is disposed with several data lines. Compared with the prior art, the scan lines of the invention are not electrically connected with the second pixel electrode array, so that the components of the display module and apparatus can be reduced. This can sufficiently decrease the power consumption. Compared with the prior art, since the material of the second substrate, such as a printed circuit board, a flexible printed circuit board, or a glass circuit board, is different with that of the first substrate 21, the manufacturing cost of the display module and apparatus of the invention can be reduced. In addition, the second pixel electrode array can operate without the driving signal transmitted through the scan lines.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A display module, comprising:
a first substrate having a first pixel electrode array;
a second substrate having a second pixel electrode array;
a driving unit;
a plurality of data lines electrically connected to the driving unit and the first pixel electrode array, wherein at least a part of the data lines are electrically connected to the second pixel electrode array through the first substrate; and
a plurality of scan lines electrically connected to the driving unit and the first pixel electrode array, wherein all of the scan lines are not electrically connected to the second pixel electrode array.

2. The display module according to claim 1, further comprising:
a connecting plate connecting the first substrate and the second substrate for electrically connecting the part of the data lines to the second pixel electrode array.

3. The display module according to claim 1, wherein the first substrate is a transistor substrate, and the second substrate is a printed circuit board, a flexible circuit board, or a glass circuit board.

4. The display module according to claim 1, further comprising:
a counter electrode unit disposed opposite to the first substrate and the second substrate; and
an optoelectronic display unit disposed between the counter electrode, the first substrate and the second substrate.

5. The display module according to claim 4, wherein the counter electrode unit is an electrode layer or an electrode plate.

6. The display module according to claim 4, wherein the optoelectronic display unit comprises an electrophoresis material or an electrowetting material.

7. The display module according to claim 1, wherein:
during a first time period, the scan lines are driven in sequence; and
during a second time period, the scan lines are not driven and the part of the data lines transmits a data signal to the second pixel electrode array.

8. A display apparatus, comprising:
a display module, comprising:
a first substrate having a first pixel electrode array;
a second substrate having a second pixel electrode array;
a driving unit;
a plurality of data lines electrically connected to the driving unit and the first pixel electrode array, wherein at least a part of the data lines are electrically connected to the second pixel electrode array through the first substrate; and
a plurality of scan lines electrically connected to the driving unit and the first pixel electrode array, wherein all of the scan lines are not electrically connected to the second pixel electrode array.

9. The display apparatus according to claim 8, wherein the display module further comprises:
a connecting plate connecting the first substrate and the second substrate for electrically connecting the part of the data lines to the second pixel electrode array.

10. The display module according to claim 8, wherein the first substrate is a transistor substrate, and the second substrate is a printed circuit board, a flexible circuit board, or a glass circuit board.

11. The display apparatus according to claim 8, wherein the display module further comprises:
a counter electrode unit disposed opposite to the first substrate and the second substrate; and
an optoelectronic display unit disposed between the counter electrode, the first substrate and the second substrate.

12. The display apparatus according to claim 11, wherein the counter electrode unit is an electrode layer or an electrode plate.

13. The display apparatus according to claim 11, wherein the optoelectronic display unit comprises an electrophoresis material or an electrowetting material.

14. The display apparatus according to claim 8, wherein:
during a first time period, the scan lines are driven in sequence; and
during a second time period, the scan lines are not driven and the part of the data lines transmits a data signal to the second pixel electrode array.
